# EUROPEAN PATENT SPECIFICATION

(11) **EP 3 462 661 B1**
(45) Date of publication and mention of the grant of the patent: **11.01.2023**
(21) Application number: 18194692.2
(22) Date of filing: 17.09.2018
(51) Int. Cl.: H04L 5/00

(54) **RANDOMIZATION OF SHORT TRANSMISSION TIME INTERVAL TRANSMISSION**
RANDOMISIERUNG EINER ÜBERTRAGUNG MIT KURZEN ÜBERTRAGUNGSZEITINTERVALLEN
RANDOMISATION DE TRANSMISSION DE L'INTERVALLE DE DURÉE DE TRANSMISSION COURTE

(30) Priority: 28.09.2017 US 201762564821 P
(43) Date of publication of application: 03.04.2019
(73) Proprietor: Nokia Technologies Oy, 02610 Espoo (FI)
(72) Inventor: LUNTTILA, Timo, 02200 Espoo (FI); HUGL, Klaus, 1070 Wien (AT); KORHONEN, Juha, 02210 Espoo (FI)
(74) Representative: Style, Kelda Camilla Karen

(56) References cited:
- WO-A1-2017/041685
- WO-A2-2017/105135
- HUAWEI ET AL: "Grant-free resource configuration", 3GPP DRAFT; R2-1705118 GRANT-FREE RESOURCE CONFIGURATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Hangzhou, China; 20170515 - 20170519 14 May 2017 (2017-05-14), XP051275594, Retrieved from the Internet: URL:http://www.3gpp.org/ftp/Meetings_3GPP_ SYNC/RAN2/Docs/ [retrieved on 2017-05-14]

## Description

### BACKGROUND:

### Field:

Various communication systems may benefit from appropriate collision avoidance mechanisms. For example, highly reliable and low latency communication systems may benefit from the randomization of short transmission time interval transmissions.

### Description of the Related Art:

For the future of mobile radio communication, there may be three main areas of data communication use: enhanced Mobile Broadband (eMBB), Internet of Things (IoT), and Ultra-Reliable Low Latency Communication (URLLC). For URLLC services, there may be value in improving at least the physical layer reliabilities in order to be able to provide highly reliable LTE based communication under certain latency constraints. In the LTE context, such communication is also denoted as highly reliable and low latency communication (HRLLC).

Improvement may focus on improving the reliability of the data communication and the associated control channels in order to provide HRLLC. There may, for example, be a requirement of a reliability of 10⁻⁵ error rate within 1 ms communication latency. There may also be other target scenarios with a less stringent reliability or latency constraints.

Long term evolution (LTE) standards support various means for randomizing UL transmissions. The supported methods include hopping of cyclic shifts between demodulation reference signal (DMRS) or physical uplink control channel (PUCCH) symbols. The supported methods also include slot-wise DMRS sequence or sequence group hopping.

The purpose of these methods may be to randomize inter-cell interference. There are thirty sequence groups with one or two sequences for each number of allocated physical resource blocks (PRBs), and hopping between the groups is cell specific. If sequence group hopping is disabled, the cell-specific pseudo-random sequence hopping may be configured between two sequences for allocations larger than five PRBs. The cyclic shift hopping is always in use: a cell-specific pseudo-random hop is added to a UE-specific cyclic shift of a sequence so that the cyclic shift hops between slots in PUSCH or symbols in sequence-based PUCCH formats. In addition to these methods, randomization through PRB scheduling is available for PUSCH, both for new transmissions and retransmissions.

WO 2017/105135 A2 discloses an uplink reference signal transmitting method for a terminal configured to support a length of a transmission time interval (TTI) in a wireless communication system. The method may comprise the steps of: receiving configuration information associated with an uplink reference signal for a plurality of TTIs from a base station; and transmitting an uplink reference signal in at least one TTI from among the plurality of TTIs, using the received configuration information, wherein the configuration information may be included in signaling that schedules at least one TTI from among the plurality of TTIs.

WO 2017/041685 A1 discloses an uplink data transmission method including the steps of: sending by a terminal device to a network device, information used to request a grant-free transmission resource; receiving, by the terminal device, resource indication information sent by the network device, where the resource indication information is used to indicate a grant-free transmission resource that is allocated by the network device to the terminal device according to the information used to request the grant-free transmission resource; and determining, by the terminal device according to the resource indication information, the transmission resource used for performing grant-free transmission.

HUAWEI ET AL: "Grant-free resource configuration", 3GPP DRAFT; R2-1705118 GRANT-FREE RESOURCE CONFIGURATION, 3RD GENERATION PARTNERSHIP PROJECT (3GPP), MOBILE COMPETENCE CENTRE; 605, ROUTE DES LUCIOLES; F-06921 SOPHIA-ANTIPOLIS CEDEX; FRANCE, vol. RAN WG2, no. Hangzhou, China; 20170515 - 20170519 discusses mechanism of grant-free operation in NR.

### SUMMARY:

According to an embodiment, there is provided a method according to appended claim 1.

According to an embodiment, there is provided an apparatus according to appended claim 2.

According to an embodiment, there is provided a method according to appended claim 4.

According to an embodiment, there is provided an apparatus according to appended claim 8.

### BRIEF DESCRIPTION OF THE DRAWINGS:

For proper understanding of the invention, reference should be made to the accompanying drawings, wherein:
Figure 1 illustrates Table 1, which shows data and demodulation reference signal combinations for each short transmission time interval, according to certain embodiments.
Figure 2 illustrates a short transmission time interval hopping pattern according to certain embodiments.
Figure 3 illustrates hopping patterns with a constraint that every resource is used in each pattern, according to certain embodiments.
Figures 4A-4D illustrate combined hopping of frequency resources and DMRS cyclic shifts, according to certain embodiments.
Figure 5 illustrates a method according to certain embodiments.
Figure 6 illustrates a system according to certain embodiments.

### DETAILED DESCRIPTION:

In short transmission time interval (sTTI) operation with two or three symbol short physical uplink shared channel (sPUSCH), namely sPUSCH operation in subslot TTI, the presence and the position of the demodulation reference signal (DMRS) is indicated to a user equipment (UE) dynamically using downlink control information (DCI) on short physical downlink control channel (sPDCCH) for uplink (UL) grants.

One motivation for a dynamic DMRS indication can be to facilitate DMRS sharing. From a single UE point of view, DMRS sharing may mean that DMRS transmitted in a given sTTI can be used by the evolved Node B (eNodeB) for demodulating sPUSCH another sTTI. Additionally, UEs transmitting in adjacent sTTIs may also transmit their DMRS in the same PRBs of a symbol, such that the DMRS of different UEs can be separated by using different cyclic shifts or interleaved frequency division multiple access (IFDMA) combs.

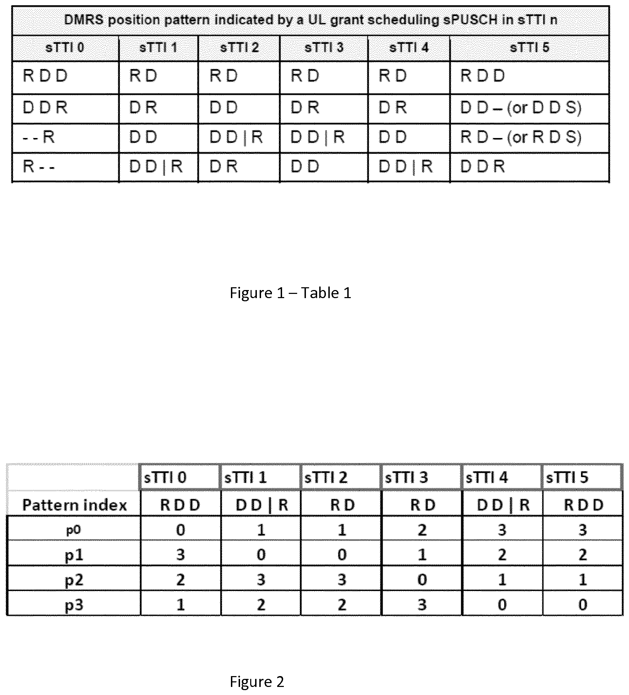

Figure 1 illustrates Table 1, which shows data and demodulation reference signal combinations for each short transmission time interval, according to certain embodiments. Data is indicated by "D" and DMRS is denoted by "R". "-" denotes an empty symbol and "|" a subslot boundary. More particularly, Table 1 shows indication of data and DMRS combinations for sPUSCH in subslot TTI (i.e. 2/3-symbol sTTI).

In HRLLC, one way of reducing UL latency is to pre-allocate sPUSCH resources such that the UE may use them when necessary, without having to send first a scheduling request and waiting for an UL grant for sPUSCH transmission. In the case of a subslot TTI, this may also involve pre-assigning the DMRS locations for the UE.

Pre-allocation of UL resources for a UE can a result in those resources being unused a large portion of the time. Therefore, some degree of overbooking of UL resources may be employed, by allocating the same resources for multiple users, with the expectation that usually most of the UEs would not use the resources. Using this approach, collisions may occasionally occur when two UEs having the same resources happen to transmit at the same time.

Diversity transmissions may help provide reliability of HRLLC. Diversity can be seen as randomization and/or repetition in time, frequency and code domains. Diversity and randomization may be useful when overbooking UL resources. For example, if two users were configured with the same UL resources and both became active and started transmitting HRLLC transmissions at the same time, without randomization their UL transmissions might collide indefinitely. With appropriate randomization, however, the occurrence of collisions can be distributed such that on average they occur only seldom.

Certain embodiments provide various methods for randomizing HRLLC UL transmissions, taking into account especially the DMRS assignment for subslot sPUSCH.

Certain embodiments provide or rely on a definition of randomization or hopping patterns for HRLLC operation. This definition can include the position of the DMRS. The hopping can be performed on a per sTTI level. Also, the hopping can be performed in one or more of: frequency domain, for example physical resource block (PRB) hopping; cyclic shift domain, for example cyclic shift hopping; between IFDMA combs or interlaces; between DMRS sequences, for example neighbor cell interference randomization; or any combination thereof. More specifically, certain embodiments define hopping patterns such that DMRS sharing is also possible.

Figure 2 illustrates a short transmission time interval hopping pattern in case of subslot TTI according to certain embodiments. In certain embodiments, when hopping is enabled, hopping is performed according to one of four mutually orthogonal patterns p0, p1, p2, and p3, such that hopping occurs unevenly after every other sTTI as shown in Figure 2. In Figure 2, hopping takes place between resources 0, 1, 2, and 3. Each resource may correspond to for example a PRB, a cyclic shift, an IFDMA comb, and a DMRS sequence, or a combination thereof.

More specifically, in Figure 2 the hops occur after sTTIs # 0, #2, #3, and #5. However, between sTTIs #1 and #2, and between sTTIs #4 and #5, the frequency domain resources, cyclic shifts, IFDMA comb and/or DMRS sequence remains the same. This can permit utilization of the same DMRS for two sTTIs. As shown in Figure 2, hopping occurs such that DMRS ("R" in the figure) can be shared in some occasions between adjacent sTTIs.

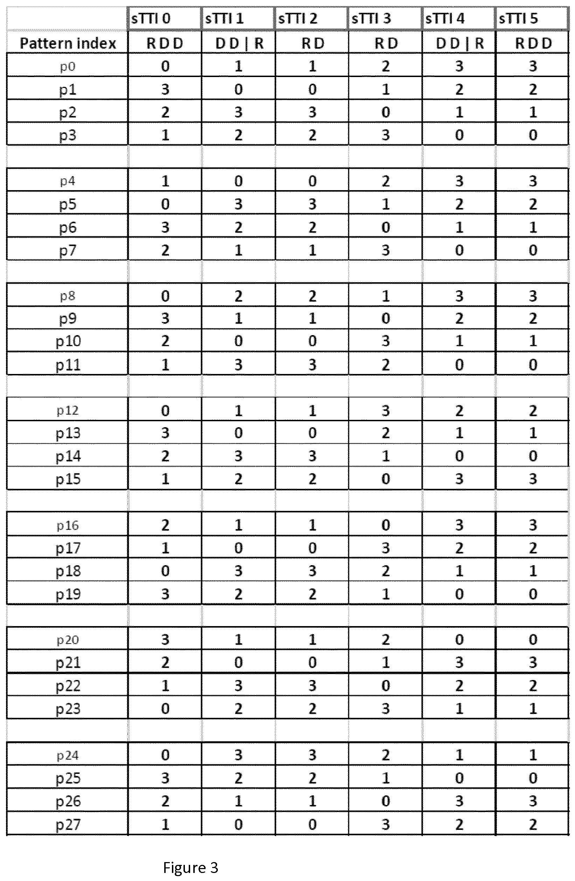

Furthermore, the hopping patterns for, for example, frequency domain resources and cyclic shifts can also be combined to increase the number of hopping patters further. An example of such arrangements is discussed below. Only orthogonal hopping patterns, with no resource collision between any of the patterns, are shown in Figure 2. The patterns can be frequency, cyclic shift, or IFDMA comb, as mentioned above. An example with also non-orthogonal patterns is given below with the illustration of Figure 3.

In the example of Figure 2, there are four orthogonal hopping patterns defined (p0, p1, p2, and p3). Thus, up to four UEs could be configured without any collisions between them. Overbooking with collisions can take place if more than four UEs need to be supported.

Figure 3 illustrates 28 hopping patterns (p0...p27) with a constraint that every resource (0, 1, 2, and 3) is used in each pattern, according to certain embodiments. Each resource may correspond to for example one or more of: a PRB, a cyclic shift, an IFDMA comb, and a DMRS sequence, or a combination thereof. Thus, Figure 3 shows patterns in which all four resources are in use in every pattern. These patterns allow at least two collision free occasions sTTI #0, sTTI #1+#2, sTTI #3, or sTTI #4+#5, between any two patterns.

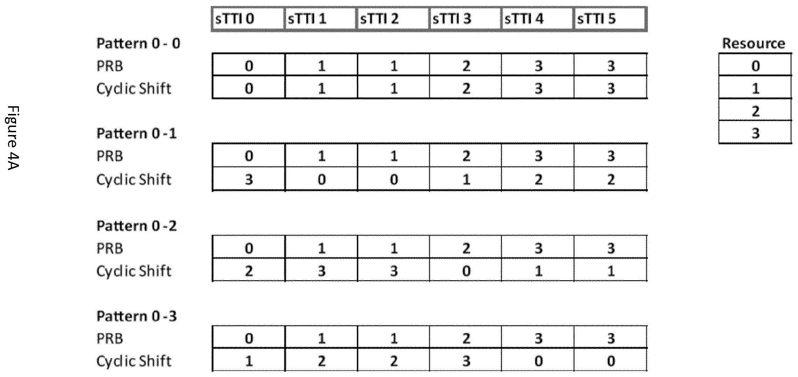

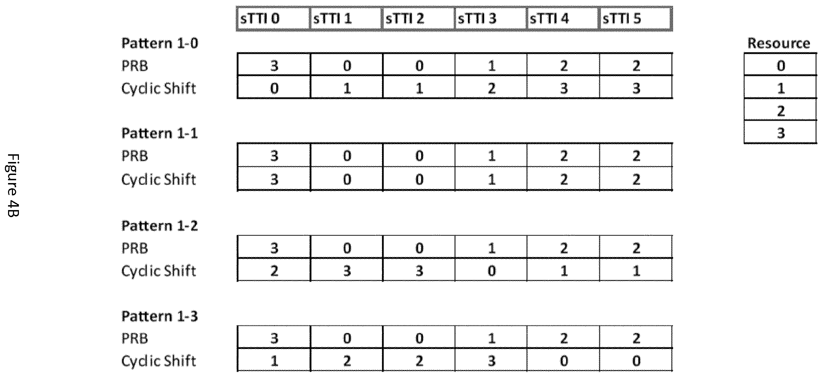

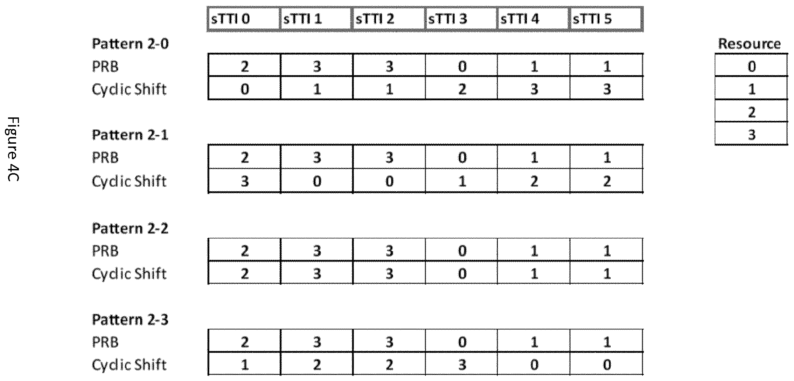

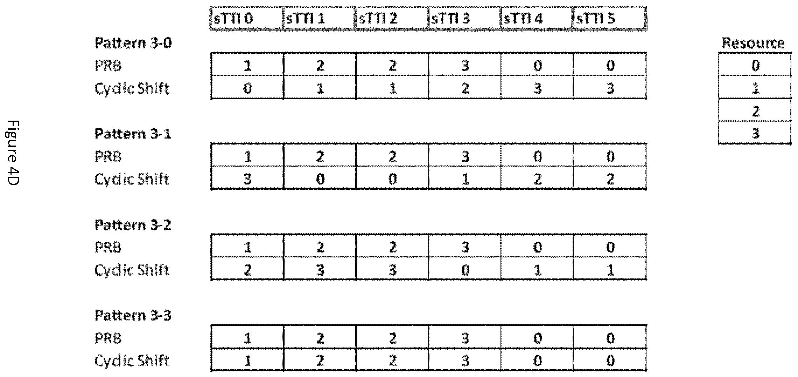

Figures 4A-4D illustrate combined hopping of frequency resources (resources 0, 1, 2, and 3) and DMRS cyclic shifts (0, 1, 2, and 3), according to certain embodiments. The number of orthogonal patterns increases if combinations of frequency domain resources and cyclic shifts are used as shown in Figures 4A-4D. Similar additional randomization to increase the number of supported UEs can be achieved by having different DM-RS sequences or indices of the DMRS IFDMA comb.

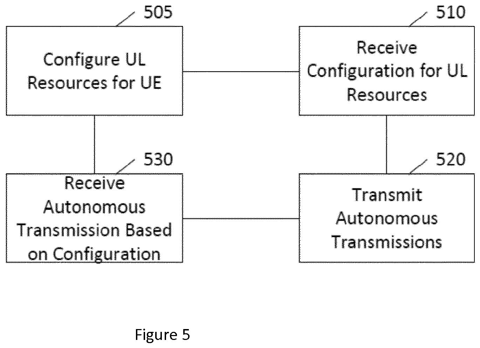

Figure 5 illustrates a method according to certain embodiments. As shown in Figure 5, from a UE point of view, certain embodiments can involve a method. The method can include, at 510, receiving a configuration of UL resources for autonomous, grantless/free, for example HRLLC, transmissions. The configuration can include an indication of which of a plurality of hopping patterns to apply. The configuration may be given for example using Radio Resource Control (RRC) signaling, or using downlink control information on a physical control channel, such as the message activating the resources for HRLLC transmissions. Thus, the configuration can be done by direct configuration or by activation or deactivation downlink control information.

Each hopping pattern can define at least one of: physical resource block(s) for UL, for example sPUSCH, transmission in each sTTI; DMRS cyclic shift in each sTTI; DMRS sequence in each sTTI; index of the DMRS IFDMA comb in each sTTI; or any combination of the above.

For each hopping pattern any of the above parameters may change from one sTTI to another such that at least some of the parameters may change only after every other sTTI of a subframe. The change or hop can be configured so as not to happen between sTTIs #1 and #2, and not to happen between sTTIs #4 and #5.

The method can also include, at 520, transmitting autonomous, for example HRLLC, transmissions based on the configured UL resources including the hopping pattern.

The above portions of the method may be from a UE point of view. From an eNB point of view, certain embodiments can likewise involve a method. The method can include, at 505, configuring a UE with UL resources for autonomous, for example HRLLC, transmissions. The configuration can include an indication of which of a plurality of hopping patterns to apply.

As noted above, each hopping pattern can define at least one of: physical resource block(s) for UL, for example sPUSCH, transmission in each sTTI; DMRS cyclic shift in each sTTI; DMRS sequence in each sTTI; index of the DMRS IFDMA comb in each sTTI; or any combination of the above.

Moreover, as also noted above, for each hopping pattern any of the above parameters may change from one sTTI to another such that at least some of the parameter may change only after every other sTTI of a subframe. The change or hop can be configured so as not to happen between sTTIs #1 and #2, and not to happen between sTTIs #4 and #5.

The method can also include, at 530, receiving from the UE autonomous, grant-free/less (HRLLC) transmissions based on the configured UL resources including the hopping pattern.

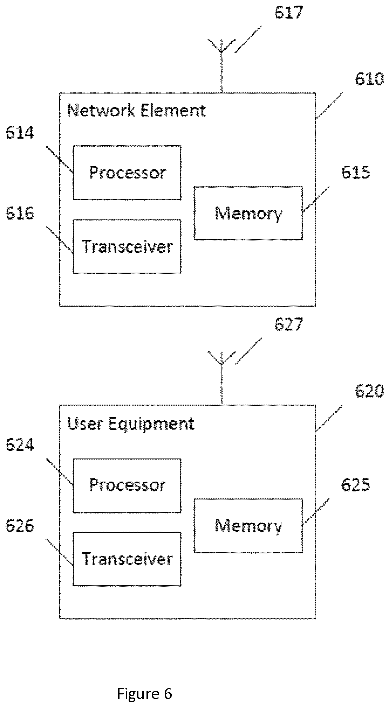

Figure 6 illustrates a system according to certain embodiments of the invention. It should be understood that each block of the flowchart of Figure 5 may be implemented by various means or their combinations, such as hardware, software, firmware, one or more processors and/or circuitry. In one embodiment, a system may include several devices, such as, for example, network element 610 and user equipment (UE) or user device 620. The system may include more than one UE 620 and more than one network element 610, although only one of each is shown for the purposes of illustration. A network element can be an access point, a base station, an eNode B (eNB), or any other network element, such as a next generation Node B (gNB). Each of these devices may include at least one processor or control unit or module, respectively indicated as 614 and 624. At least one memory may be provided in each device, and indicated as 615 and 625, respectively. The memory may include computer program instructions or computer code contained therein, for example for carrying out the embodiments described above. One or more transceiver 616 and 626 may be provided, and each device may also include an antenna, respectively illustrated as 617 and 627. Although only one antenna each is shown, many antennas and multiple antenna elements may be provided to each of the devices. Other configurations of these devices, for example, may be provided. For example, network element 610 and UE 620 may be additionally configured for wired communication, in addition to wireless communication, and in such a case antennas 617 and 627 may illustrate any form of communication hardware, without being limited to merely an antenna.

Transceivers 616 and 626 may each, independently, be a transmitter, a receiver, or both a transmitter and a receiver, or a unit or device that may be configured both for transmission and reception. The transmitter and/or receiver (as far as radio parts are concerned) may also be implemented as a remote radio head which is not located in the device itself, but in a mast, for example. It should also be appreciated that according to the "liquid" or flexible radio concept, the operations and functionalities may be performed in different entities, such as nodes, hosts or servers, in a flexible manner. In other words, division of labor may vary case by case. One possible use is to make a network element to deliver local content. One or more functionalities may also be implemented as a virtual application that is provided as software that can run on a server.

A user device or user equipment 620 may be a mobile station (MS) such as a mobile phone or smart phone or multimedia device, a computer, such as a tablet, provided with wireless communication capabilities, personal data or digital assistant (PDA) provided with wireless communication capabilities, vehicle, portable media player, digital camera, pocket video camera, navigation unit provided with wireless communication capabilities or any combinations thereof. The user device or user equipment 620 may be a sensor or smart meter, or other device that may usually be configured for a single location.

In an exemplifying embodiment, an apparatus, such as a node or user device, may include means for carrying out embodiments described above in relation to Figures 1-5.

Processors 614 and 624 may be embodied by any computational or data processing device, such as a central processing unit (CPU), digital signal processor (DSP), application specific integrated circuit (ASIC), programmable logic devices (PLDs), field programmable gate arrays (FPGAs), digitally enhanced circuits, or comparable device or a combination thereof. The processors may be implemented as a single controller, or a plurality of controllers or processors. Additionally, the processors may be implemented as a pool of processors in a local configuration, in a cloud configuration, or in a combination thereof. The term circuitry may refer to one or more electric or electronic circuits. The term processor may refer to circuitry, such as logic circuitry, that responds to and processes instructions that drive a computer.

For firmware or software, the implementation may include modules or units of at least one chip set (e.g., procedures, functions, and so on). Memories 615 and 625 may independently be any suitable storage device, such as a non-transitory computerreadable medium. A hard disk drive (HDD), random access memory (RAM), flash memory, or other suitable memory may be used. The memories may be combined on a single integrated circuit as the processor, or may be separate therefrom. Furthermore, the computer program instructions may be stored in the memory and which may be processed by the processors can be any suitable form of computer program code, for example, a compiled or interpreted computer program written in any suitable programming language. The memory or data storage entity is typically internal but may also be external or a combination thereof, such as in the case when additional memory capacity is obtained from a service provider. The memory may be fixed or removable.

The memory and the computer program instructions may be configured, with the processor for the particular device, to cause a hardware apparatus such as network element 610 and/or UE 620, to perform any of the processes described above (see, for example, Figure 5). Therefore, in certain embodiments, a non-transitory computerreadable medium may be encoded with computer instructions or one or more computer program (such as added or updated software routine, applet or macro) that, when executed in hardware, may perform a process such as one of the processes described herein. Computer programs may be coded by a programming language, which may be a high-level programming language, such as objective-C, C, C++, C#, Java, etc., or a low-level programming language, such as a machine language, or assembler. Alternatively, certain embodiments of the invention may be performed entirely in hardware.

Furthermore, although Figure 6 illustrates a system including a network element 610 and a UE 620, embodiments of the invention may be applicable to other configurations, and configurations involving additional elements, as illustrated and discussed herein. For example, multiple user equipment devices and multiple network elements may be present, or other nodes providing similar functionality, such as nodes that combine the functionality of a user equipment and an access point, such as a relay node.

Certain embodiments may have various benefits and/or advantages. For example, certain embodiments may provide a way of performing short transmission time interval (sTTI) transmissions or subslot TTI transmissions according to a pre-configuration of DMRS.

Moreover, certain embodiments may provide a randomization / hopping mechanism, which may help in mitigating collisions between HRLLC users sharing the same resources, while improving frequency diversity of the transmissions.

In the case of resource overbooking for HRLLC users, certain embodiments may improve the possibility of identifying when a collision has occurred and between which users.

### List of Abbreviations

- 3GPP: 3^{rd} Generation Partnership Project
- DCI: Downlink Control Information
- DMRS: Demodulation Reference Symbol
- FS: Frame Structure
- eMBB: enhanced Mobile Broadband
- HRLLC: High-Reliable Low Latency Communication
- IFDMA: Interleaved Frequency Division Multiple Access
- IoT: Internet of Things
- LTE: Long Term Evolution
- OS: OFDMA Symbol
- PRB: Physical Resource Block
- PUCCH: Physical Uplink Control Channel
- PUSCH: Physical Uplink Shared Channel
- MTC: Machine Type Communication
- NB-IoT: NarrowBand IoT
- sPUCCH: short Physical Uplink Control Channel
- sPUSCH: short Physical UL Shared Channel
- sTTI: short Transmission Time Interval
- TTI: Transmission Time Interval
- UE: User Equipment
- UL: Uplink
- URLLC: Ultra-Reliable Low Latency Communication

## Claims

1. A method, comprising:
receiving (510), by a user equipment (620), a configuration of uplink resources for autonomous transmissions, wherein the configuration comprises an indication of which of a plurality of hopping patterns to apply;
transmitting (520) the autonomous transmissions based on the configured uplink resources including the indicated hopping pattern,
wherein the hopping is performed on a per-short-transmission-time-interval or subslot-interval basis,
wherein each hopping pattern of the plurality of hopping patterns defines at least one parameter of:
physical resource block(s) for uplink, UL, transmission in each short transmission time interval, sTTI;
demodulation reference signal, DMRS, cyclic shift in each short transmission time interval, sTTI;
demodulation reference signal, DMRS, sequence in each short transmission time interval, sTTI;
index of the demodulation reference signal, DMRS, interleaved frequency division multiple access, IFDMA,
comb in each short transmission time interval, sTTI; and
**characterised in that**, for each hopping pattern, any of said at least one parameter changes from one short transmission time interval, sTTI, to another such that at least some of the parameters do not change between sTTIs#1 and #2 and between sTTI#4 and #5 allowing utilization of the same demodulation reference signal, DMRS, for two sTTIs.

2. An apparatus (620), comprising:
receiving means (616) for receiving (510), by a user equipment (620), a configuration of uplink resources for autonomous transmissions, wherein the configuration comprises an indication of which of a plurality of hopping patterns to apply; and
transmitting means (616) for transmitting (520) the autonomous transmissions based on the configured uplink resources including the indicated hopping pattern,
wherein the hopping is performed on a per-short-transmission-time-interval or subslot-interval basis,
wherein each hopping pattern of the plurality of hopping patterns defines at least one parameter of:
physical resource block(s) for uplink, UL, transmission in each short transmission time interval, sTTI;
demodulation reference signal, DMRS, cyclic shift in each short transmission time interval, sTTI;
demodulation reference signal, DMRS, sequence in each short transmission time interval, sTTI;
index of the demodulation reference signal, DMRS, interleaved frequency division multiple access, IFDMA,
comb in each short transmission time interval, sTTI; and
**characterised in that**, for each hopping pattern, any of said at least one parameter changes from one short transmission time interval, sTTI, to another such that at least some of the parameters do not change between sTTIs#1 and #2 and between sTTI#4 and #5 allowing utilization of the same demodulation reference signal, DMRS, for two sTTIs.

3. The apparatus (620) according to claim 2, wherein the configuration is done by direct configuration or by activation or deactivation downlink control information.

4. A method, comprising:
configuring (505), by a network node (610), a user equipment (620) with uplink resources for autonomous transmissions, wherein the configuring comprises an indication of which of a plurality of hopping patterns to apply;
receiving (530) from the user equipment (620) the autonomous transmissions based on the configured uplink resources including the indicated hopping pattern of the plurality of hopping patterns,
wherein the hopping is performed on a per-short-transmission-time-interval or subslot-interval basis,
wherein each hopping pattern of the plurality of hopping patterns defines at least one parameter of:
physical resource block(s) for uplink, UL, transmission in each short transmission time interval, sTTI;
demodulation reference signal, DMRS, cyclic shift in each short transmission time interval, sTTI;
demodulation reference signal, DMRS, sequence in each short transmission time interval, sTTI;
index of the demodulation reference signal, DMRS, interleaved frequency division multiple access, IFDMA,
comb in each short transmission time interval, sTTI; and
**characterised in that**, for each hopping pattern, any of said at least one parameter changes from one short transmission time interval, sTTI, to another such that at least some of the parameters do not change between sTTIs#1 and #2 and between sTTI#4 and #5 allowing utilization of the same demodulation reference signal, DMRS, for two sTTIs.

5. The method according to claim 4, wherein the configuring (505) comprises configuring using direct configuration or using activation or deactivation downlink control information.

6. The method according to claims 1 or 4, wherein, for each hopping pattern, any of said at least one parameter changes from one short transmission time interval, sTTI, to another.

7. The method according to claims 1 or 4, wherein, for each hopping pattern any of said at least one parameter changes from one short transmission time interval, sTTI, to another such that at least some of the parameters may change only after every other short transmission time interval, sTTI, of a subframe.

8. An apparatus (610), comprising:
configuring means (614) for configuring (505) a user equipment (620) with uplink resources for autonomous transmissions, wherein the configuring comprises an indication of which of a plurality of hopping patterns to apply;
receiving means (626) for receiving (530) from the user equipment (620) the autonomous transmissions based on the configured uplink resources including the indicated hopping pattern of the plurality of hopping patterns,
wherein the hopping is performed on a per-short-transmission-time-interval or subslot-interval basis,
wherein each hopping pattern of the plurality of hopping patterns defines at least one parameter of:
physical resource block(s) for uplink, UL, transmission in each short transmission time interval, sTTI;
demodulation reference signal, DMRS, cyclic shift in each short transmission time interval, sTTI;
demodulation reference signal, DMRS, sequence in each short transmission time interval, sTTI;
index of the demodulation reference signal, DMRS, interleaved frequency division multiple access, IFDMA,
comb in each short transmission time interval, sTTI; and
**characterised in that**, for each hopping pattern, any of said at least one parameter changes from one short transmission time interval, sTTI, to another such that at least some of the parameters do not change between sTTIs#1 and #2 and between sTTI#4 and #5 allowing utilization of the same demodulation reference signal, DMRS, for two sTTIs.

9. The apparatus (610) according to claim 8, wherein the configuring means (614) comprises means for configuring using direct configuration or using activation or deactivation downlink control information.

10. The apparatus (610) according to claims 8 or 9, wherein the configuring means comprises means for transmitting a configuration for the user equipment (616) to the user equipment (620).

11. The apparatus according to claims 2 or 8, wherein the autonomous transmissions comprise highly reliable and low latency communication transmissions.

12. The apparatus according to claims 2 or 8, wherein, for each hopping pattern, any of said at least one parameter changes from one short transmission time interval, sTTI, to another.

13. The apparatus according to claims 2 or 8, wherein, for each hopping pattern any of said at least one parameter changes from one short transmission time interval, sTTI, to another such that at least some of the parameters may change only after every other short transmission time interval, sTTI, of a subframe.

## Patentansprüche

1. Verfahren, das Folgendes umfasst:
Empfangen (510) einer Auslegung von Uplinkressourcen für autonome Übertragungen durch eine Teilnehmereinrichtung (620), wobei die Auslegung eine Anzeige dazu umfasst, welches einer Vielzahl von Sprungmustern anzuwenden ist;
Übertragen (520) der autonomen Übertragungen auf Basis der ausgelegten Uplinkressourcen, die das angezeigte Sprungmuster beinhalten,
wobei das Springen auf Pro-kurzemÜbertragungszeitintervall-Basis oder Unterschlitzintervallbasis durchgeführt wird,
wobei jedes Sprungmuster der Vielzahl von Sprungmustern mindestens einen Parameter von Folgendem definiert:
physischer Ressourcenblock bzw. physische Ressourcenblöcke für eine Uplink(UL)-Übertragung in jedem kurzen Übertragungszeitintervall, sTTI;
zyklische Demodulationsreferenzsignal(DMRS)-Verschiebung in jedem kurzen Übertragungszeitintervall, sTTI;
Demodulationsreferenzsignal(DMRS)-Sequenz in jedem kurzen Übertragungszeitintervall, sTTI;
Index des Interleaved-Frequency-Division-Multiple-Access(IFDMA)-Kamms des Demodulationsreferenzsignals, DMRS, in jedem kurzen Übertragungszeitintervall, sTTI; und
**dadurch gekennzeichnet, dass** sich für jedes Sprungmuster jeder des mindestens einen Parameters von einem kurzen Übertragungszeitintervall, sTTI, zu einem anderen ändert, derart, dass sich mindestens einige der Parameter zwischen sTTI Nr. 1 und Nr. 2 und zwischen sTTI Nr. 4 und Nr. 5 nicht ändern, wodurch der Einsatz desselben Demodulationsreferenzsignals, DMRS, für zwei sTTIs erlaubt wird.

2. Vorrichtung (620), die Folgendes umfasst:
ein Empfangsmittel (616) zum Empfangen (510) einer Auslegung von Uplinkressourcen für autonome Übertragungen durch eine Teilnehmereinrichtung (620), wobei die Auslegung eine Anzeige dazu umfasst, welches einer Vielzahl von Sprungmustern anzuwenden ist; und
ein Übertragungsmittel (616) zum Übertragen (520) der autonomen Übertragungen auf Basis der ausgelegten Uplinkressourcen, die das angezeigte Sprungmuster beinhalten,
wobei das Springen auf Pro-kurzemÜbertragungszeitintervall-Basis oder Unterschlitzintervallbasis durchgeführt wird,
wobei jedes Sprungmuster der Vielzahl von Sprungmustern mindestens einen Parameter von Folgendem definiert:
physischer Ressourcenblock bzw. physische Ressourcenblöcke für eine Uplink(UL)-Übertragung in jedem kurzen Übertragungszeitintervall, sTTI;
zyklische Demodulationsreferenzsignal(DMRS)-Verschiebung in jedem kurzen Übertragungszeitintervall, sTTI;
Demodulationsreferenzsignal(DMRS)-Sequenz in jedem kurzen Übertragungszeitintervall, sTTI;
Index des Interleaved-Frequency-Division-Multiple-Access(IFDMA)-Kamms des Demodulationsreferenzsignals, DMRS, in jedem kurzen Übertragungszeitintervall, sTTI; und
**dadurch gekennzeichnet, dass** sich für jedes Sprungmuster jeder des mindestens einen Parameters von einem kurzen Übertragungszeitintervall, sTTI, zu einem anderen ändert, derart, dass sich mindestens einige der Parameter zwischen sTTI Nr. 1 und Nr. 2 und zwischen sTTI Nr. 4 und Nr. 5 nicht ändern, wodurch der Einsatz desselben Demodulationsreferenzsignals, DMRS, für zwei sTTIs erlaubt wird.

3. Vorrichtung (620) nach Anspruch 2, wobei die Auslegung durch direkte Auslegung oder durch Aktivierung oder Deaktivierung von Downlinksteuerinformationen erfolgt.

4. Verfahren, das Folgendes umfasst:
Auslegen (505) einer Teilnehmereinrichtung (620) durch einen Netzwerkknoten (610) mit Uplinkressourcen für autonome Übertragungen, wobei das Auslegen eine Anzeige dazu umfasst, welches einer Vielzahl von Sprungmustern anzuwenden ist;
Empfangen (530) der autonomen Übertragungen von der Teilnehmereinrichtung (620) auf Basis der ausgelegten Uplinkressourcen, die das angezeigte Sprungmuster der Vielzahl von Sprungmustern beinhalten,
wobei das Springen auf Pro-kurzemÜbertragungszeitintervall-Basis oder Unterschlitzintervallbasis durchgeführt wird,
wobei jedes Sprungmuster der Vielzahl von Sprungmustern mindestens einen Parameter von Folgendem definiert:
physischer Ressourcenblock bzw. physische Ressourcenblöcke für eine Uplink(UL)-Übertragung in jedem kurzen Übertragungszeitintervall, sTTI;
zyklische Demodulationsreferenzsignal(DMRS)-Verschiebung in jedem kurzen Übertragungszeitintervall, sTTI;
Demodulationsreferenzsignal(DMRS)-Sequenz in jedem kurzen Übertragungszeitintervall, sTTI;
Index des Interleaved-Frequency-Division-Multiple-Access(IFDMA)-Kamms des Demodulationsreferenzsignals, DMRS, in jedem kurzen Übertragungszeitintervall, sTTI; und
**dadurch gekennzeichnet, dass** sich für jedes Sprungmuster jeder des mindestens einen Parameters von einem kurzen Übertragungszeitintervall, sTTI, zu einem anderen ändert, derart, dass sich mindestens einige der Parameter zwischen sTTI Nr. 1 und Nr. 2 und zwischen sTTI Nr. 4 und Nr. 5 nicht ändern, wodurch der Einsatz desselben Demodulationsreferenzsignals, DMRS, für zwei sTTIs erlaubt wird.

5. Verfahren nach Anspruch 4, wobei das Auslegen (505) das Auslegen unter Verwendung einer direkten Auslegung oder unter Verwendung einer Aktivierung oder Deaktivierung von Downlinksteuerinformationen umfasst.

6. Verfahren nach den Ansprüchen 1 oder 4, wobei sich für jedes Sprungmuster jeder des mindestens einen Parameters von einem kurzen Übertragungszeitintervall, sTTI, zu einem anderen ändert.

7. Verfahren nach den Ansprüchen 1 oder 4, wobei sich für jedes Sprungmuster jeder des mindestens einen Parameters von einem kurzen Übertragungszeitintervall, sTTI, zu einem anderen ändert, derart, dass sich mindestens einige der Parameter möglicherweise nur nach jedem zweiten Übertragungszeitintervall, sTTI, eines Unterframes ändern.

8. Vorrichtung (610), die Folgendes umfasst:
ein Auslegungsmittel (614) zum Auslegen (505) einer Teilnehmereinrichtung (620) mit Uplinkressourcen für autonome Übertragungen, wobei das Auslegen eine Anzeige dazu umfasst, welches einer Vielzahl von Sprungmustern anzuwenden ist;
ein Empfangsmittel (626) zum Empfangen (530) der autonomen Übertragungen von der Teilnehmereinrichtung (620) auf Basis der ausgelegten Uplinkressourcen, die das angezeigte Sprungmuster der Vielzahl von Sprungmustern beinhalten,
wobei das Springen auf Pro-kurzemÜbertragungszeitintervall-Basis oder Unterschlitzintervallbasis durchgeführt wird,
wobei jedes Sprungmuster der Vielzahl von Sprungmustern mindestens einen Parameter von Folgendem definiert:
physischer Ressourcenblock bzw. physische Ressourcenblöcke für eine Uplink(UL)-Übertragung in jedem kurzen Übertragungszeitintervall, sTTI;
zyklische Demodulationsreferenzsignal(DMRS)-Verschiebung in jedem kurzen Übertragungszeitintervall, sTTI;
Demodulationsreferenzsignal(DMRS)-Sequenz in jedem kurzen Übertragungszeitintervall, sTTI;
Index des Interleaved-Frequency-Division-Multiple-Access(IFDMA)-Kamms des Demodulationsreferenzsignals, DMRS, in jedem kurzen Übertragungszeitintervall, sTTI; und
**dadurch gekennzeichnet, dass** sich für jedes Sprungmuster jeder des mindestens einen Parameters von einem kurzen Übertragungszeitintervall, sTTI, zu einem anderen ändert, derart, dass sich mindestens einige der Parameter zwischen sTTI Nr. 1 und Nr. 2 und zwischen sTTI Nr. 4 und Nr. 5 nicht ändern, wodurch der Einsatz desselben Demodulationsreferenzsignals, DMRS, für zwei sTTIs erlaubt wird.

9. Vorrichtung (610) nach Anspruch 8, wobei das Auslegungsmittel (614) Mittel zum Auslegen unter Verwendung einer direkten Auslegung oder unter Verwendung einer Aktivierung oder Deaktivierung von Downlinksteuerinformationen umfasst.

10. Vorrichtung (610) nach den Ansprüchen 8 oder 9, wobei das Auslegungsmittel Mittel zum Übertragen einer Auslegung für die Teilnehmereinrichtung (616) zur Teilnehmereinrichtung (620) umfasst.

11. Vorrichtung nach den Ansprüchen 2 oder 8, wobei die autonomen Übertragungen sehr zuverlässige Kommunikationsübertragungen geringer Latenz umfassen.

12. Vorrichtung nach den Ansprüchen 2 oder 8, wobei sich für jedes Sprungmuster jeder des mindestens einen Parameters von einem kurzen Übertragungszeitintervall, sTTI, zu einem anderen ändert.

13. Vorrichtung nach den Ansprüchen 2 oder 8, wobei sich für jedes Sprungmuster jeder des mindestens einen Parameters von einem kurzen Übertragungszeitintervall, sTTI, zu einem anderen ändert, derart, dass sich mindestens einige der Parameter möglicherweise nur nach jedem zweiten Übertragungszeitintervall, sTTI, eines Unterframes ändern.

## Revendications

1. Procédé, comprenant :
la réception (510), par un équipement utilisateur (620), d'une configuration de ressources de liaison montante pour des transmissions autonomes, dans lequel la configuration comprend une indication de celui à appliquer d'une pluralité de motifs de saut ;
la transmission (520) des transmissions autonomes sur la base des ressources de liaison montante configurées comportant le motif de saut indiqué,
dans lequel le saut est réalisé sur une base d'intervalle de temps de transmission par court-circuit ou d'intervalle de sous-lot,
dans lequel chaque motif de saut de la pluralité de motifs de saut définit au moins un paramètre parmi :
un/des bloc(s) de ressources physiques pour une transmission de liaison montante, UL, dans chaque intervalle de temps de transmission court, sTTI ;
un décalage cyclique de signal de référence de démodulation, DMRS, dans chaque intervalle de temps de transmission court, sTTI ;
une séquence de signal de référence de démodulation, DMRS, dans chaque intervalle de temps de transmission court, sTTI ;
un indice du peigne d'accès multiple par répartition en fréquence entrelacé, IFDMA, de signal de référence de démodulation, DMRS, dans chaque intervalle de temps de transmission court, sTTI ; et
**caractérisé en ce que**, pour chaque motif de saut, l'un quelconque dudit au moins un paramètre change d'un intervalle de temps de transmission court, sTTI, à un autre, de sorte qu'au moins certains des paramètres ne changent pas entre les sTTI#1 et #2 et entre les sTTI#4 et #5, permettant l'utilisation du même signal de référence de démodulation, DMRS, pour deux sTTI.

2. Appareil (620), comprenant :
un moyen de réception (616) pour recevoir (510), par un équipement utilisateur (620), une configuration de ressources de liaison montante pour des transmissions autonomes, dans lequel la configuration comprend une indication de celui à appliquer d'une pluralité de motifs de saut ; et
un moyen de transmission (616) pour transmettre (520) les transmissions autonomes sur la base des ressources de liaison montante configurées comportant le motif de saut indiqué,
dans lequel le saut est réalisé sur une base d'intervalle de temps de transmission par court-circuit ou d'intervalle de sous-lot,
dans lequel chaque motif de saut de la pluralité de motifs de saut définit au moins un paramètre parmi :
un/des bloc(s) de ressources physiques pour une transmission de liaison montante, UL, dans chaque intervalle de temps de transmission court, sTTI ;
un décalage cyclique de signal de référence de démodulation, DMRS, dans chaque intervalle de temps de transmission court, sTTI ;
une séquence de signal de référence de démodulation, DMRS, dans chaque intervalle de temps de transmission court, sTTI ;
un indice du peigne d'accès multiple par répartition en fréquence entrelacé, IFDMA, de signal de référence de démodulation, DMRS, dans chaque intervalle de temps de transmission court, sTTI ; et
**caractérisé en ce que**, pour chaque motif de saut, l'un quelconque dudit au moins un paramètre change d'un intervalle de temps de transmission court, sTTI, à un autre, de sorte qu'au moins certains des paramètres ne changent pas entre les sTTI#1 et #2 et entre les sTTI#4 et #5, permettant l'utilisation du même signal de référence de démodulation, DMRS, pour deux sTTI.

3. Appareil (620) selon la revendication 2, dans lequel la configuration est effectuée par configuration directe ou par activation ou désactivation d'informations de commande de liaison descendante.

4. Procédé, comprenant :
la configuration (505), par un nœud de réseau (610), d'un équipement utilisateur (620) avec des ressources de liaison montante pour des transmissions autonomes, dans lequel la configuration comprend une indication de celui à appliquer d'une pluralité de motifs de saut ;
la réception (530), de l'équipement utilisateur (620), des transmissions autonomes sur la base des ressources de liaison montante configurées comportant le motif de saut indiqué de la pluralité de motifs de saut,
dans lequel le saut est réalisé sur une base d'intervalle de temps de transmission par court-circuit ou d'intervalle de sous-lot,
dans lequel chaque motif de saut de la pluralité de motifs de saut définit au moins un paramètre parmi :
un/des bloc(s) de ressources physiques pour une transmission de liaison montante, UL, dans chaque intervalle de temps de transmission court, sTTI ;
une séquence de signal de référence de démodulation, DMRS, dans chaque intervalle de temps de transmission court, sTTI ;
un indice du peigne d'accès multiple par répartition en fréquence entrelacé, IFDMA, de signal de référence de démodulation, DMRS, dans chaque intervalle de temps de transmission court, sTTI ; et
**caractérisé en ce que**, pour chaque motif de saut, l'un quelconque dudit au moins un paramètre change d'un intervalle de temps de transmission court, sTTI, à un autre, de sorte qu'au moins certains des paramètres ne changent pas entre les sTTI#1 et #2 et entre les sTTI#4 et #5, permettant l'utilisation du même signal de référence de démodulation, DMRS, pour deux sTTI.

5. Procédé selon la revendication 4, dans lequel la configuration (505) comprend une configuration utilisant une configuration directe ou utilisant une activation ou une désactivation d'informations de commande de liaison descendante.

6. Procédé selon les revendications 1 ou 4, dans lequel, pour chaque motif de saut, l'un quelconque dudit au moins un paramètre change d'un intervalle de temps de transmission court, sTTI, à un autre.

7. Procédé selon les revendications 1 ou 4, dans lequel, pour chaque motif de saut, l'un quelconque dudit au moins un paramètre change d'un intervalle de temps de transmission court, sTTI, à un autre, de sorte qu'au moins certains des paramètres puissent changer seulement après chaque autre intervalle de temps de transmission court, sTTI, d'une sous-trame.

8. Appareil (610), comprenant :
un moyen de configuration (614) pour configurer (505) un équipement utilisateur (620) avec des ressources de liaison montante pour des transmissions autonomes, dans lequel la configuration comprend une indication de celui à appliquer d'une pluralité de motifs de saut ;
un moyen de réception (626) pour recevoir (530) de l'équipement utilisateur (620) les transmissions autonomes sur la base des ressources de liaison montante configurées comportant le motif de saut indiqué de la pluralité de motifs de saut,
dans lequel le saut est réalisé sur une base d'intervalle de temps de transmission par court-circuit ou d'intervalle de sous-lot,
dans lequel chaque motif de saut de la pluralité de motifs de saut définit au moins un paramètre parmi :
un/des bloc(s) de ressources physiques pour une transmission de liaison montante, UL, dans chaque intervalle de temps de transmission court, sTTI ;
un décalage cyclique de signal de référence de démodulation, DMRS, dans chaque intervalle de temps de transmission court, sTTI ;
une séquence de signal de référence de démodulation, DMRS, dans chaque intervalle de temps de transmission court, sTTI ;
un indice du peigne d'accès multiple par répartition en fréquence entrelacé, IFDMA, de signal de référence de démodulation, DMRS, dans chaque intervalle de temps de transmission court, sTTI ; et
**caractérisé en ce que**, pour chaque motif de saut, l'un quelconque dudit au moins un paramètre change d'un intervalle de temps de transmission court, sTTI, à un autre, de sorte qu'au moins certains des paramètres ne changent pas entre les sTTI#1 et #2 et entre les sTTI#4 et #5, permettant l'utilisation du même signal de référence de démodulation, DMRS, pour deux sTTI.

9. Appareil (610) selon la revendication 8, dans lequel le moyen de configuration (614) comprend un moyen de configuration utilisant une configuration directe ou utilisant une activation ou une désactivation d'informations de commande de liaison descendante.

10. Appareil (610) selon les revendications 8 ou 9, dans lequel le moyen de configuration comprend un moyen pour transmettre une configuration pour l'équipement utilisateur (616) à l'équipement utilisateur (620).

11. Appareil selon les revendications 2 ou 8, dans lequel les transmissions autonomes comprennent des transmissions de communication très fiables et à faible latence.

12. Appareil selon les revendications 2 ou 8, dans lequel, pour chaque motif de saut, l'un quelconque dudit au moins un paramètre change d'un intervalle de temps de transmission court, sTTI, à un autre.

13. Appareil selon les revendications 2 ou 8, dans lequel, pour chaque motif de saut l'un quelconque dudit au moins un paramètre change d'un intervalle de temps de transmission court, sTTI, à un autre, de sorte qu'au moins certains des paramètres puissent changer seulement après chaque autre intervalle de temps de transmission court, sTTI, d'une sous-trame.
